# EUROPEAN PATENT APPLICATION

(11) **EP 4 806 536 A1**
(43) Date of publication of application: **16.09.2026**
(21) Application number: 26158842.0
(22) Date of filing: 16.02.2026
(51) Int. Cl.: B01D 53/04

(54) **CARBON DIOXIDE CAPTURE DEVICE COMPRISING AN ADSORBENT AND A MAGNET**

(30) Priority: 10.03.2025 JP 2025037147
(71) Applicant: Toyota Jidosha Kabushiki Kaisha, Toyota-shi, Aichi-ken 471-8571 (JP)
(72) Inventor: SADAMITSU, Takahiro, Toyota-shi,, 471-8571 (JP)
(74) Representative: Winter, Brandl - Partnerschaft mbB

(57) **Abstract**

The present disclosure relates to a technology for capturing carbon dioxide. A carbon dioxide capture device includes: an adsorbent material (20) configured to adsorb carbon dioxide; a flow path (100) configured to flow a gas toward the adsorbent material (20); and a magnet (300) configured to generate a magnetic field within the flow path.

## Description

### BACKGROUND OF THE INVENTION

### 1. Field of the Invention

The present disclosure relates to a carbon dioxide capture device.

### 2. Description of Related Art

Direct Air Capture (DAC) is known as one of the technologies for capturing carbon dioxide (CO2). The DAC is a technology for directly separating and capturing carbon dioxide from a gas such as the atmosphere.

Japanese Unexamined Patent Application Publication No. 2020-182951 (JP 2020-182951 A) discloses a portable carbon dioxide absorption device. The portable carbon dioxide absorption device includes an absorbent material (adsorbent material) that absorbs (adsorbs) carbon dioxide. An amine or the like is used as the absorbent material.

### SUMMARY OF THE INVENTION

Gases such as the atmosphere contain iron-based foreign matter such as iron (Fe) particles. When such iron-based foreign matter adheres to the adsorbent material such as an amine, deterioration of the adsorbent material is accelerated by the catalytic effect of the iron-based foreign matter.

The present disclosure provides a technology that can suppress deterioration of an adsorbent material that is used to capture carbon dioxide.

A first aspect of the present disclosure provides a carbon dioxide capture device including: an adsorbent material configured to adsorb carbon dioxide; a flow path configured to flow a gas toward the adsorbent material; and a magnet configured to generate a magnetic field within the flow path.

With the first aspect of the present disclosure, the carbon dioxide capture device is provided with the magnet. The magnet generates a magnetic field within the flow path through which a gas flows toward the adsorbent material. The magnetic field exerts a magnetic force on the iron-based foreign matter contained in the gas flowing within the flow path. Then, the iron-based foreign matter is attracted by the magnetic force toward the magnet, and trapped (captured) by the magnet. That is, the iron-based foreign matter is removed from the gas upstream of the adsorbent material. Since the iron-based foreign matter flowing into the adsorbent material is reduced, deterioration of the adsorbent material is suppressed.

The carbon dioxide capture device according to the first aspect of the present disclosure may further include a gas guide structure that includes a surface that surrounds the flow path. The magnet may include a first magnet provided in a first portion of the gas guide structure.

In the carbon dioxide capture device according to the first aspect of the present disclosure, the first portion of the gas guide structure may be a non-magnetic substance.

In the carbon dioxide capture device according to the first aspect of the present disclosure, the flow path may include a first flow path portion that configured to extend in a first direction, a second flow path portion that configured to extend in a second direction different from the first direction, downstream of the first flow path portion, and a corner portion between the first flow path portion and the second flow path portion. The magnet may include a second magnet provided on an outer peripheral side of the corner portion.

In the carbon dioxide capture device according to the first aspect of the present disclosure, the second magnet may be positioned in the first direction as viewed from the first flow path portion of the flow path.

The carbon dioxide capture device according to the first aspect of the present disclosure may further include a gas guide structure that includes a surface that surrounds the flow path. The gas guide structure surrounding the corner portion of the flow path may include a second portion on an outer side of the corner portion and a third portion on an inner side of the corner portion. The second magnet may be provided in the second portion of the gas guide structure.

In the carbon dioxide capture device according to the first aspect of the present disclosure, the second portion of the gas guide structure may be a non-magnetic substance.

In the carbon dioxide capture device according to the first aspect of the present disclosure, the magnet may include a third magnet provided within the flow path.

In the carbon dioxide capture device according to the first aspect of the present disclosure, the third magnet may be fixed to a support member provided within the flow path.

In the carbon dioxide capture device according to the first aspect of the present disclosure, the third magnet may be provided on a strut of a fan installed within the flow path.

In the carbon dioxide capture device according to the first aspect of the present disclosure, the adsorbent material may contain an amine.

In the carbon dioxide capture device according to the first aspect of the present disclosure, the magnet may be a permanent magnet or an electromagnet.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram for explaining an overview of a carbon dioxide capture device;
FIG. 2 is a conceptual diagram for explaining a first example of the structure related to a magnetic field generation portion;
FIG. 3A is a conceptual diagram for explaining magnet installation example 1;
FIG. 3B is a conceptual diagram for explaining magnet installation example 2;
FIG. 3C is a conceptual diagram for explaining magnet installation example 3;
FIG. 3D is a conceptual diagram for explaining magnet installation example 4;
FIG. 4 is a conceptual diagram for explaining a second example of the structure related to the magnetic field generation portion;
FIG. 5 is a conceptual diagram for explaining a third example of the structure related to the magnetic field generation portion;
FIG. 6 is a conceptual diagram for explaining a fourth example of the structure related to the magnetic field generation portion;
FIG. 7 is a conceptual diagram for explaining a fifth example of the structure related to the magnetic field generation portion;
FIG. 8 is a conceptual diagram for explaining a sixth example of the structure related to the magnetic field generation portion;
FIG. 9 is a conceptual diagram for explaining a seventh example of the structure related to the magnetic field generation portion;
FIG. 10 is a conceptual diagram for explaining an eighth example of the structure related to the magnetic field generation portion; and
FIG. 11 is a conceptual diagram for explaining a ninth example of the structure related to the magnetic field generation portion.

### DETAILED DESCRIPTION OF EMBODIMENTS

An embodiment of the present disclosure will be described with reference to the accompanying drawings.

### 1. Overview

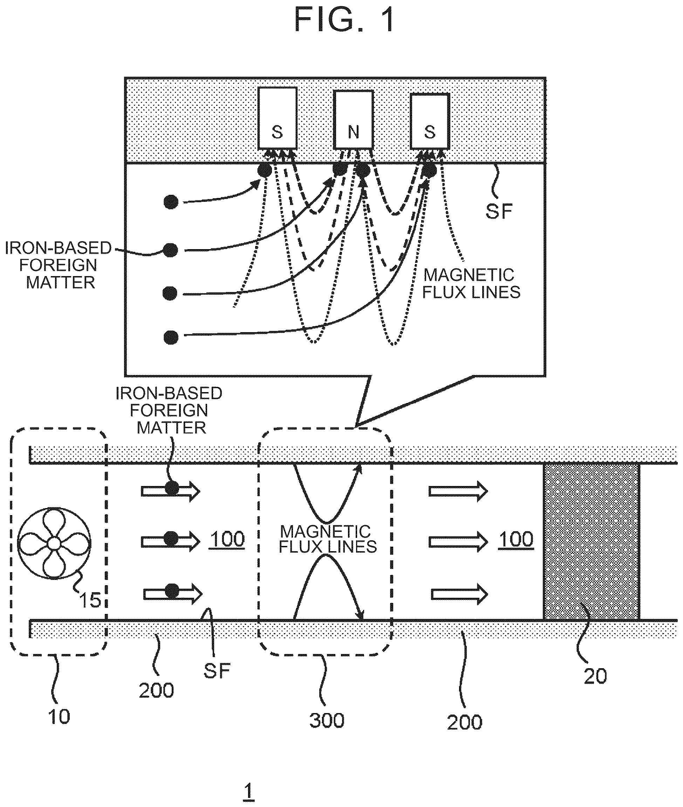

FIG. 1 is a conceptual diagram for explaining an overview of a carbon dioxide capture device 1 according to the present embodiment. The carbon dioxide capture device 1 is configured to directly separate and capture carbon dioxide (CO2) from a gas containing carbon dioxide. Examples of the gas containing carbon dioxide include the atmosphere and an exhaust gas.

The carbon dioxide capture device 1 includes a flow path 100 through which a gas flows. The flow path 100 is formed by a gas guide structure 200. More specifically, the flow path 100 is a space surrounded by surfaces SF (inner surfaces, inner walls) of the gas guide structure 200. For example, the gas guide structure 200 is a pipe. However, the gas guide structure 200 is not limited to a pipe. The shape of the flow path 100 in the longitudinal direction may be a straight line, an L-shape, an S-shape, or the like. However, the shape of the flow path 100 in the longitudinal direction is not particularly limited. The cross-sectional shape of the flow path 100 may be circular, rectangular, or the like. However, the cross-sectional shape of the flow path 100 is not particularly limited.

The most upstream portion of the flow path 100 is an intake portion 10 for taking in a gas. A fan 15 may be installed in the intake portion 10 (the most upstream portion of the flow path 100) to efficiently take in and send out a gas.

Furthermore, the carbon dioxide capture device 1 includes an adsorption portion 20 installed in a downstream portion of the flow path 100. The adsorption portion 20 includes an adsorbent that adsorbs (absorbs) carbon dioxide. For example, the adsorbent is composed of an adsorbent material containing an amino group and a plurality of porous carriers that supports the adsorbent. The porous carriers are mainly composed of either silica or alumina and have a plurality of pores with an average pore diameter of 2 nm to 200 nm. For example, the porous carriers are applied to a substrate having a honeycomb shape. Alternatively, the porous carriers have a pellet shape. The adsorbent material contains an amine, for example. For example, the adsorbent material is a polyamine containing any of polyethyleneimine, methylated polyethyleneimine, isopropylated polyethyleneimine, polyallylamine, pentaethylenehexamine, methylated pentaethylenehexamine, isopropylated pentaethylenehexamine, tetraethylenepentamine, methylated tetraethylenepentamine, and isopropylated tetraethylenepentamine, or an amino group-containing compound containing a polyamine. In particular, the adsorbent material may contain a secondary amine.

In this way, the flow path 100 is present upstream of the adsorption portion 20. The gas taken in by the intake portion 10 flows toward the adsorption portion 20 in the flow path 100. The gas then flows into the adsorption portion 20. In the adsorption portion 20, the carbon dioxide contained in the gas is adsorbed (absorbed) by the adsorbent material. The gas from which a part of the carbon dioxide has been removed by the adsorption portion 20 is discharged to the outside of the carbon dioxide capture device 1. A capture portion (not illustrated) captures the carbon dioxide adsorbed by the adsorption portion 20. For example, the capture portion desorbs and captures the carbon dioxide adsorbed in the adsorbent from the adsorbent by adjusting the adsorption portion 20 (more specifically, the storage space for the adsorbent) to a temperature higher than that during adsorption.

Here, it should be noted that the gas contains iron-based foreign matter such as iron (Fe) particles. When such iron-based foreign matter adheres to the adsorbent material such as an amine, deterioration of the adsorbent material is accelerated by the catalytic effect of the iron-based foreign matter. It is conceivable to use a filter to remove the iron-based foreign matter. However, iron particles on the order of micrometers are also present in the gas. When an attempt is made to remove such iron particles on the order of micrometers using a filter, the pressure loss caused by the filter will be significant. This is not preferable from the viewpoint of increasing energy consumption in the carbon dioxide capture device 1.

Therefore, the present embodiment proposes a technique that can reduce the amount of iron-based foreign matter that flows into the adsorbent material without using a filter, thereby suppressing deterioration of the adsorbent material.

As illustrated in FIG. 1, the carbon dioxide capture device 1 according to the present embodiment further includes a "magnetic field generation portion 300". The magnetic field generation portion 300 is configured to be able to generate a magnetic field within the flow path 100 upstream of the adsorption portion 20. Typically, the magnetic field generation portion 300 includes a magnet. The magnet may be a permanent magnet or an electromagnet. The magnet is installed so as to generate a magnetic field within the flow path 100 upstream of the adsorption portion 20.

The magnetic field generated within the flow path 100 exerts a magnetic force on the iron-based foreign matter contained in the gas flowing within the flow path 100. Then, the iron-based foreign matter is attracted by the magnetic force toward a wall (the inner wall of the gas guide structure 200) in accordance with the direction of the lines of magnetic force in the magnetic field generated by the magnetic field generation portion 300, and trapped (captured) by the magnetic field generation portion 300. That is, the iron-based foreign matter is removed from the gas upstream of the adsorbent material. Since the iron-based foreign matter flowing into the adsorbent material is significantly reduced, deterioration of the adsorbent material is suppressed.

Furthermore, since a filter for removing iron-based foreign matter is not required, no pressure loss is caused by a filter. This is preferable from the viewpoint of reducing energy consumption in the carbon dioxide capture device 1.

Various examples of the structure related to the magnetic field generation portion 300 of the carbon dioxide capture device 1 according to the present embodiment will be described below.

### 2. Various Examples

### 2-1. First Example

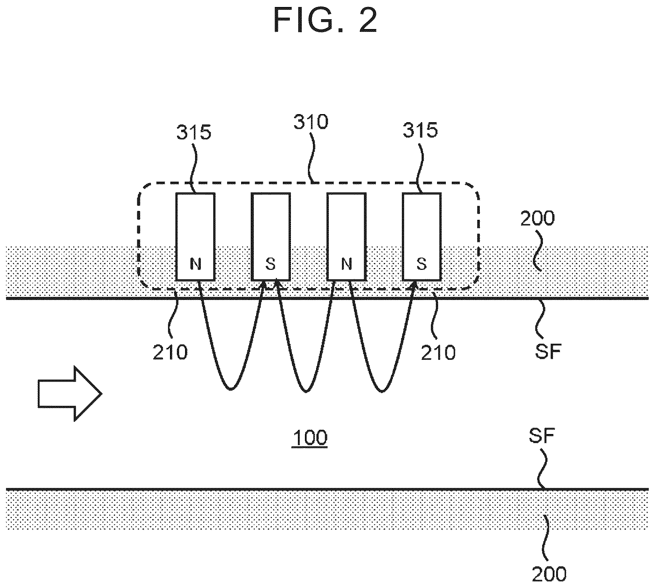

FIG. 2 is a conceptual diagram for explaining a first example. In the first example, the magnetic field generation portion 300 includes a first magnet 310. The first magnet 310 may include a plurality of unit magnets 315. In the example illustrated in FIG. 2, a plurality of unit magnets 315 is disposed along the flow path 100 such that north and south poles appear alternately along the flow path 100.

The first magnet 310 is provided in a first portion 210 of the gas guide structure 200 surrounding the flow path 100. A magnetic field is generated within the flow path 100 in the vicinity of the first portion 210 by the first magnet 310 provided in the first portion 210.

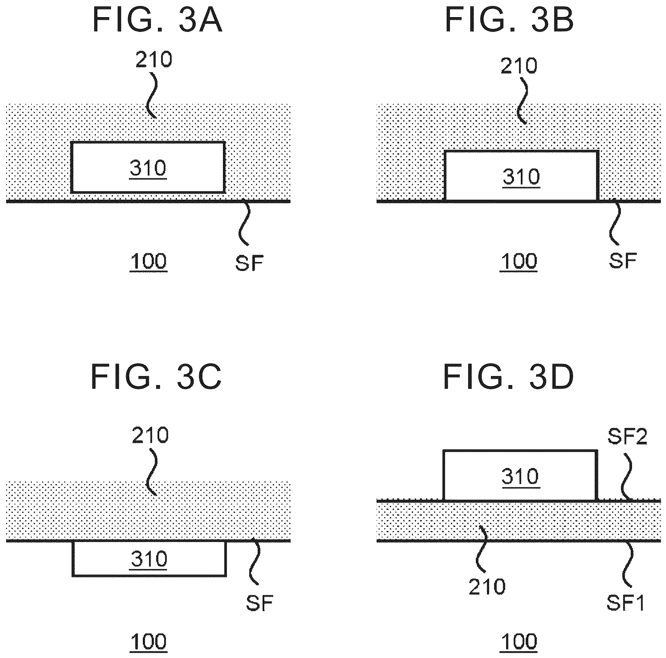

FIGS. 3A to 3D illustrate various examples of the manner of installation of the first magnet 310 with respect to the first portion 210 of the gas guide structure 200. In FIG. 3A, the first magnet 310 is embedded inside the first portion 210 and is located below a surface SF of the first portion 210, and is not exposed to the flow path 100. In FIG. 3B, the first magnet 310 is embedded in the first portion 210 and is exposed to the flow path 100. In FIG. 3C, the first magnet 310 is attached on the surface SF of the first portion 210. In FIG. 3D, the first portion 210 has a first surface SF1 on the flow path 100 side and a second surface SF2 opposite the first surface SF1, and the first magnet 310 is attached on the second surface SF2 of the first portion 210. In any case, the first magnet 310 provided in the first portion 210 can generate a magnetic field within the flow path 100 in the vicinity of the first portion 210.

The first portion 210 of the gas guide structure 200 may be a non-magnetic substance. Being a non-magnetic substance means that it is not a ferromagnetic substance. For example, a non-magnetic substance is a paramagnetic substance. When the first portion 210 is a ferromagnetic substance, the magnetic flux emitted from the first magnet 310 tends to be absorbed by the first portion 210 as a ferromagnetic substance, and there is a possibility that the magnetic flux emitted into the flow path 100 is reduced. On the other hand, when the first portion 210 is a non-magnetic substance, the magnetic flux emitted from the first magnet 310 tends to be emitted into the flow path 100. That is, when the first portion 210 is a non-magnetic substance, a magnetic field is effectively generated within the flow path 100. This is preferable from the viewpoint of trapping iron-based foreign matter.

### 2-2. Second Example

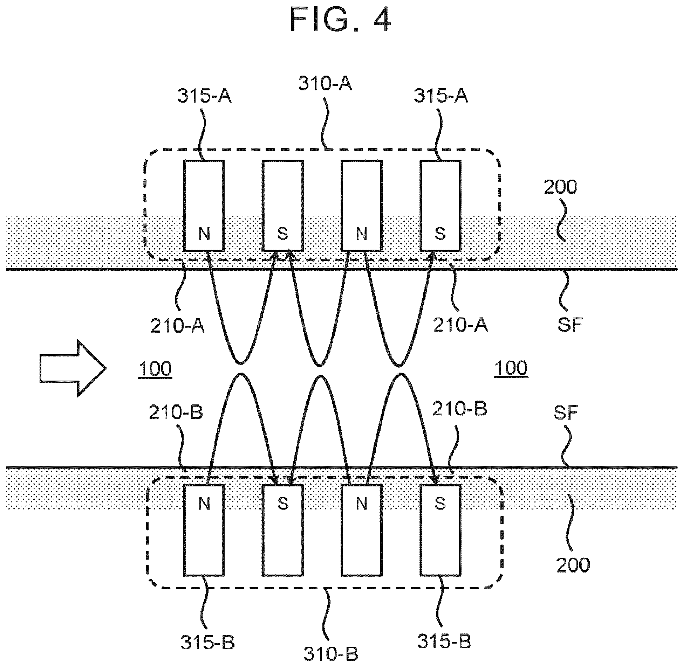

FIG. 4 is a conceptual diagram for explaining a second example. The second example is a modification of the first example described above. Explanations that overlap with the first example will be omitted where appropriate.

In the second example, a plurality of first magnets 310 is provided so as to surround the flow path 100. For example, a first magnet 310-A is provided in a first portion 210-A of the gas guide structure 200, and a first magnet 310-B is provided in a first portion 210-B of the gas guide structure 200. The first portion 210-A and the first portion 210-B of the gas guide structure 200 face each other across the flow path 100. That is, the first magnet 310-A and the first magnet 310-B are provided so as to face each other across the flow path 100.

When a plurality of first magnets 310 is provided so as to surround the flow path 100 in this manner, the magnetic field generated within the flow path 100 becomes more uniform. This makes it possible to trap iron-based foreign matter in the flow path 100 more effectively.

### 2-3. Third Example

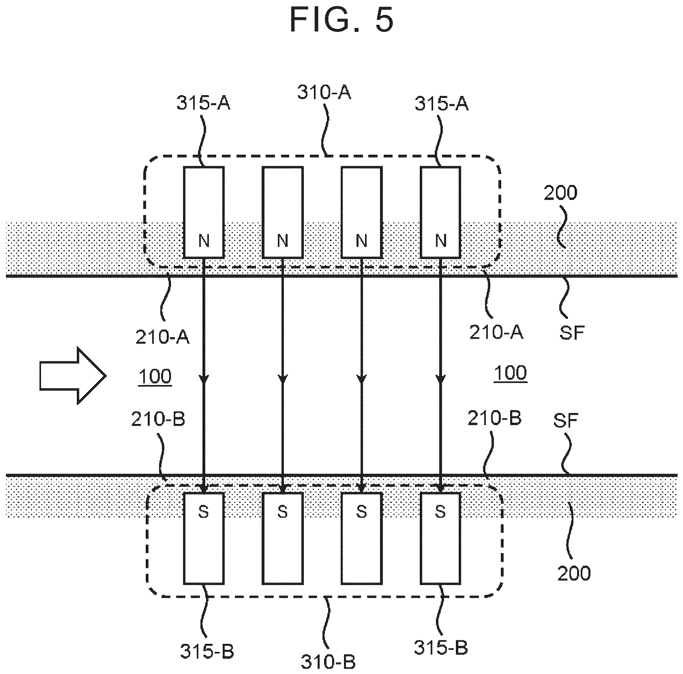

FIG. 5 is a conceptual diagram for explaining a third example. The third example is a modification of the second example described above. Explanations that overlap with the second example will be omitted where appropriate.

In the third example, north and south poles face each other across the flow path 100. For example, the first magnet 310-A has north poles on the flow path 100 side, and the first magnet 310-B has south poles on the flow path 100 side. For example, the first magnet 310-A includes a plurality of unit magnets 315-A, and the unit magnets 315-A are disposed along the flow path 100 such that the north poles appear consecutively along the flow path 100. On the other hand, the first magnet 310-B includes a plurality of unit magnets 315-B, and the unit magnets 315-B are disposed along the flow path 100 such that the south poles appear consecutively along the flow path 100. With this configuration, a magnetic field is generated across the flow path 100 from the first magnet 310-A toward the first magnet 310-B. This also achieves the same effect.

### 2-4. Fourth Example

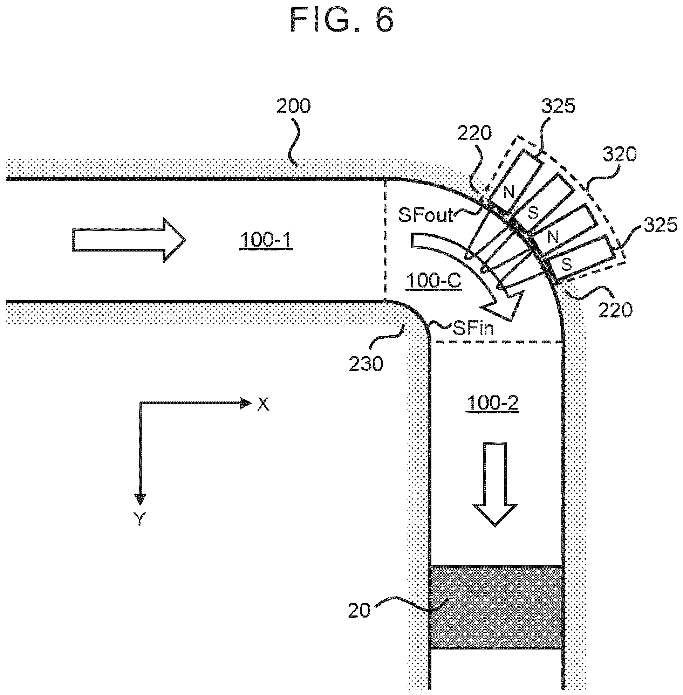

FIG. 6 is a conceptual diagram for explaining a fourth example. In the fourth example, the flow path 100 is bent. More specifically, the flow path 100 includes a first flow path portion 100-1, a second flow path portion 100-2, and a corner portion 100-C. The first flow path portion 100-1 extends in an X direction (first direction). The second flow path portion 100-2 extends in a Y direction (second direction) different from the X direction, downstream of the first flow path portion 100-1. The corner portion 100-C is interposed between the first flow path portion 100-1 and the second flow path portion 100-2.

The longitudinal direction of the first flow path portion 100-1 is the X direction, and the gas flows in the X direction in the first flow path portion 100-1. The longitudinal direction of the second flow path portion 100-2 is the Y direction, and the gas flows in the Y direction in the second flow path portion 100-2. At the corner portion 100-C between the first flow path portion 100-1 and the second flow path portion 100-2, the flow direction of the gas transitions from the X direction to the Y direction. In that sense, the corner portion 100-C can also be called a "transition portion".

In the example illustrated in FIG. 6, the flow path 100 is curved at the corner portion 100-C. In that sense, the corner portion 100-C illustrated in FIG. 6 can also be called a "curved portion". The curvature of the curved portion is greater than 0, and the radius of curvature of the curved portion is finite.

The definitions of the "outer side" and the "inner side" of the corner portion 100-C are the same as the general definitions of the "outer side" and the "inner side" of a curve. That is, the "outer side" is the side of an object passing through a curve that faces the direction of centrifugal force acting on the object.

As illustrated in FIG. 6, the gas guide structure 200 surrounding the corner portion 100-C includes a second portion 220 on the outer side of the corner portion 100-C and a third portion 230 on the inner side of the corner portion 100-C. In other words, the corner portion 100-C of the flow path 100 is interposed between the second portion 220 as the gas guide structure 200 on the outer side and the third portion 230 as the gas guide structure 200 on the inner side. An outer surface SFout is the surface SF of the second portion 220 of the gas guide structure 200. An inner surface SFin is the surface SF of the third portion 230 of the gas guide structure 200. In terms of length along the flow path 100, the outer surface SFout is longer than the inner surface SFin.

The magnetic field generation portion 300 includes a second magnet 320. The second magnet 320 is provided in the second portion 220 on the outer side of the gas guide structure 200 surrounding the corner portion 100-C. Here, the definition of being "provided" is based on that explained above with reference to FIGS. 3A to 3D. That is, various manners of installation of the second magnet 320 with respect to the second portion 220 of the gas guide structure 200 are conceivable, as with FIGS. 3A to 3D described above.

The second magnet 320 may include a plurality of unit magnets 325. In the example illustrated in FIG. 6, a plurality of unit magnets 325 is disposed along the flow path 100 such that north and south poles appear alternately along the flow path 100.

The second magnet 320 provided in the second portion 220 of the gas guide structure 200 generates a magnetic field in the flow path 100 in the vicinity of the second portion 220, that is, in the corner portion 100-C. In particular, the second magnet 320 generates a stronger magnetic field on the outer side of the corner portion 100-C than on the inner side. The gas flowing through the corner portion 100-C is subjected to a centrifugal force. In particular, iron-based foreign matter contained in the gas flowing through the corner portion 100-C tends to be concentrated on the outer side of the corner portion 100-C due to the centrifugal force. The iron-based foreign matter that is concentrated on the outer side of the corner portion 100-C is efficiently trapped by the strong magnetic field on the outer side of the corner portion 100-C. In other words, the iron-based foreign matter that is concentrated on the outer side of the corner portion 100-C due to the centrifugal force is efficiently trapped by providing the second magnet 320 on the outer side of the corner portion 100-C.

As illustrated in FIG. 6, the second magnet 320 (second portion 220) is preferably positioned in the X direction (first direction) when viewed from the first flow path portion 100-1 of the flow path 100. The iron-based foreign matter flowing in the X direction in the first flow path portion 100-1 tends to approach the outer surface SFout of the second portion 220 positioned in the X direction as viewed from the first flow path portion 100-1 due to inertia. It is possible to trap iron-based foreign matter more efficiently by positioning the second magnet 320 in the X direction as viewed from the first flow path portion 100-1.

The second portion 220 of the gas guide structure 200 may be a non-magnetic substance. Being a non-magnetic substance means that it is not a ferromagnetic substance. For example, a non-magnetic substance is a paramagnetic substance. When the second portion 220 is a ferromagnetic substance, the magnetic flux emitted from the second magnet 320 tends to be absorbed by the second portion 220 as a ferromagnetic substance, and there is a possibility that the magnetic flux emitted into the flow path 100 is reduced. On the other hand, when the second portion 220 is a non-magnetic substance, the magnetic flux emitted from the second magnet 320 tends to be emitted into the flow path 100. That is, when the second portion 220 is a non-magnetic substance, a magnetic field is effectively generated within the flow path 100. This is preferable from the viewpoint of trapping iron-based foreign matter.

As described above, in the fourth example, the second magnet 320 provided on the outer side of the corner portion 100-C of the flow path 100 generates a stronger magnetic field on the outer side of the corner portion 100-C than on the inner side. This makes it possible to efficiently trap the iron-based foreign matter that is concentrated on the outer side of the corner portion 100-C due to the centrifugal force.

It should be noted that another magnet may be provided in the third portion 230 on the inner side of the corner portion 100-C of the flow path 100. However, when there is a limit to the number of magnets that can be installed, it is more efficient to provide magnets preferentially on the outer side of the corner portion 100-C rather than on the inner side, for the reasons mentioned above.

### 2-5. Fifth Example

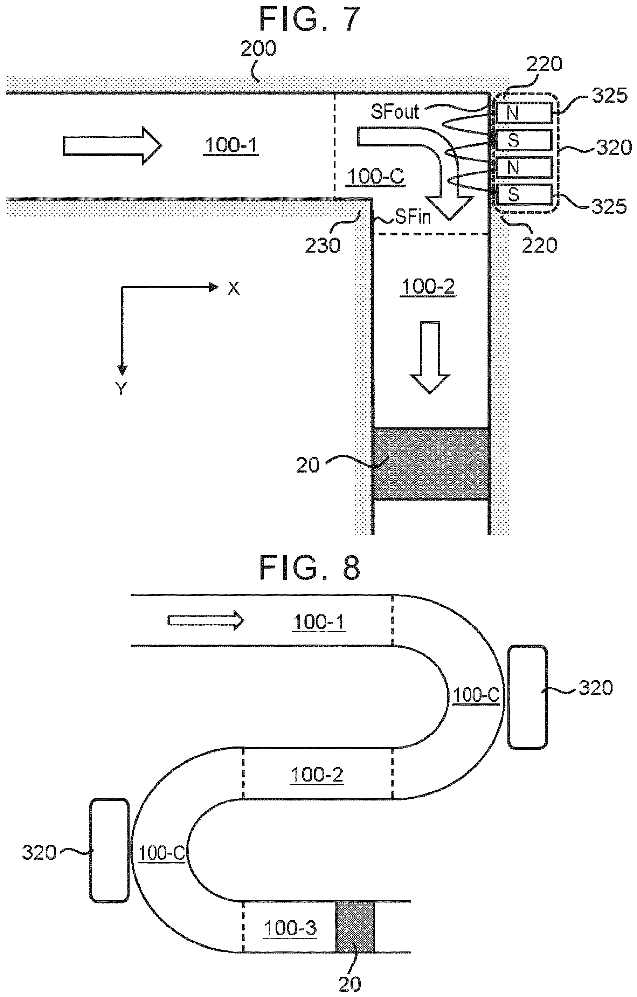

FIG. 7 is a conceptual diagram for explaining a fifth example. The fifth example is a modification of the fourth example described above. Explanations that overlap with the fourth example will be omitted where appropriate.

In the example illustrated in FIG. 7, the flow path 100 is bent at the corner portion 100-C. In that sense, the corner portion 100-C illustrated in FIG. 7 can also be called a "bent portion".

The rest is the same as in the fourth example described above. All of the discussion made above regarding the fourth example also applies to the fifth example.

### 2-6. Sixth Example

FIG. 8 is a conceptual diagram for explaining a sixth example. The sixth example is a modification of the fourth example described above. Explanations that overlap with the fourth example will be omitted where appropriate.

In the example illustrated in FIG. 8, the flow path 100 includes a plurality of corner portions 100-C. The second magnet 320 is provided in each of the corner portions 100-C.

The rest is the same as in the fourth example described above. All of the discussion made above regarding the fourth example also applies to the sixth example. In the fourth example, the unit magnets 325 are disposed along a curve. In the sixth example, the unit magnets 325 may be disposed along a curve in the same manner, or may be disposed in line as illustrated in FIG. 8. When the unit magnets 325 are disposed along a curve, the amount of magnetic field generated in the flow path 100 increases. On the other hand, when the unit magnets 325 are arranged in line, manufacturing is facilitated.

### 2-7. Seventh Example

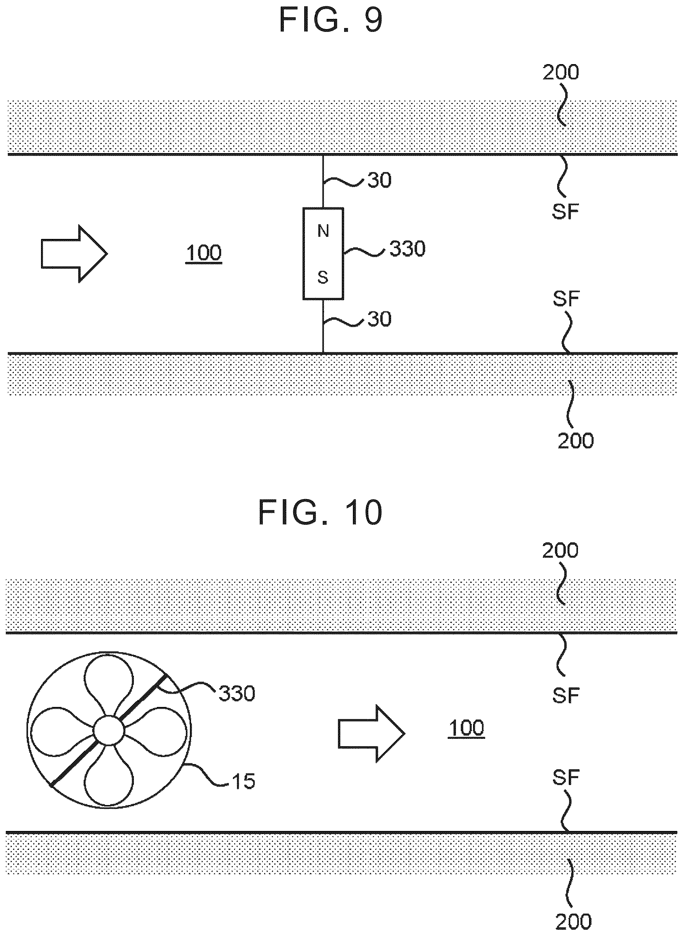

FIG. 9 is a conceptual diagram for explaining a seventh example. In the seventh example, the magnetic field generation portion 300 includes a third magnet 330 provided in the flow path 100. For example, the third magnet 330 is fixed to a support member 30 provided in the flow path 100. In FIG. 9, the support member 30 is provided perpendicularly to the direction in which the gas flows in the flow path 100. The support member 30 may not be provided perpendicularly to the direction in which the gas flows in the flow path 100, and may be provided as inclined with respect to or in parallel with such a direction.

A magnetic field can be generated directly in the flow path 100 by providing the third magnet 330 in the flow path 100 in this manner. The third magnet 330 provided in the flow path 100 makes it possible to effectively trap iron-based foreign matter in the flow path 100.

### 2-8. Eighth Example

FIG. 10 is a conceptual diagram for explaining an eighth example. The eighth example is a modification of the seventh example described above. In the eighth example, the third magnet 330 is provided on a strut of a fan 15 installed in the flow path 100 (intake portion 10). The strut of the fan 15 corresponds to the support member 30. The same effect can be obtained in the eighth example.

### 2-9. Ninth Example

Combinations of two or more of the first to eighth examples described above are also possible.

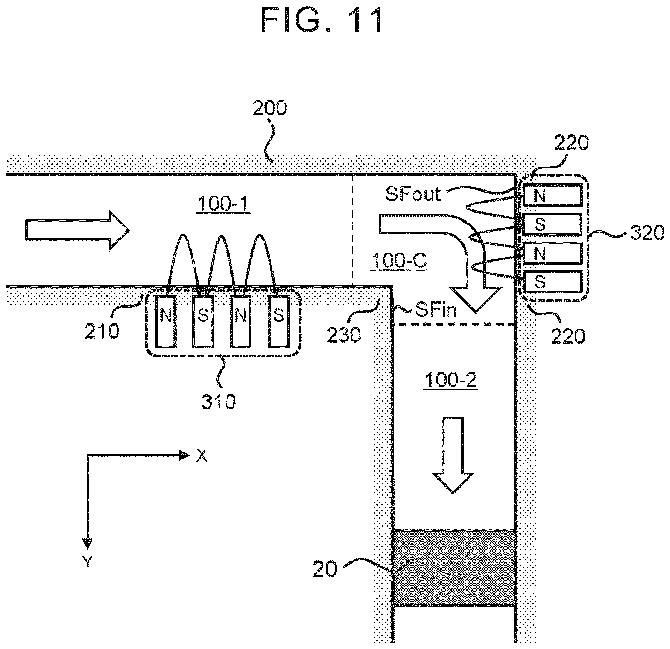

For example, FIG. 11 illustrates a combination of the first and fifth examples described above. The second magnet 320 is provided in the second portion 220 on the outer side of the corner portion 100-C of the flow path 100. The first magnet 310 is provided in the first portion 210 surrounding the first flow path portion 100-1 on the upstream side. In particular, the first magnet 310 is provided in the first portion 210 on the same side as the third portion 230 on the inner side of the corner portion 100-C.

### 3. Effects

As described above, according to the present embodiment, the carbon dioxide capture device 1 is provided with the magnetic field generation portion 300. The magnetic field generation portion 300 generates a magnetic field within the flow path 100 through which the gas flows toward the adsorbent material. The magnetic field exerts a magnetic force on the iron-based foreign matter contained in the gas flowing within the flow path 100. Then, the iron-based foreign matter is attracted by the magnetic force toward the magnetic field generation portion 300, and trapped (captured) by the magnetic field generation portion 300. That is, the iron-based foreign matter is removed from the gas upstream of the adsorbent material. Since the iron-based foreign matter flowing into the adsorbent material is significantly reduced, deterioration of the adsorbent material is suppressed.

Furthermore, since a filter for removing iron-based foreign matter is not required, no pressure loss is caused by a filter. This is preferable from the viewpoint of reducing energy consumption in the carbon dioxide capture device 1.

## Claims

1. A carbon dioxide capture device comprising:
an adsorbent material (20) configured to adsorb carbon dioxide;
a flow path (100) configured to flow a gas toward the adsorbent material (20); and
a magnet (300) configured to generate a magnetic field within the flow path.

2. The carbon dioxide capture device according to claim 1, further comprising a gas guide structure (200) that includes a surface that surrounds the flow path (100), wherein
the magnet (300) includes a first magnet provided in a first portion of the gas guide structure (200).

3. The carbon dioxide capture device according to claim 2, wherein the first portion of the gas guide structure (200) is a non-magnetic substance.

4. The carbon dioxide capture device according to claim 1, wherein:
the flow path (100) includes
a first flow path portion configured to extend in a first direction,
a second flow path portion configured to extend in a second direction different from the first direction, downstream of the first flow path portion, and
a corner portion between the first flow path portion and the second flow path portion; and
the magnet (300) includes a second magnet provided on an outer peripheral side of the corner portion.

5. The carbon dioxide capture device according to claim 4, wherein the second magnet is positioned in the first direction as viewed from the first flow path portion of the flow path.

6. The carbon dioxide capture device according to claim 4, further comprising a gas guide structure (200) that includes a surface that surrounds the flow path (100), wherein:
the gas guide structure (200) surrounding the corner portion of the flow path (100) includes a second portion on an outer side of the corner portion and a third portion on an inner side of the corner portion; and
the second magnet is provided in the second portion of the gas guide structure (200).

7. The carbon dioxide capture device according to claim 6, wherein the second portion of the gas guide structure (200) is a non-magnetic substance.

8. The carbon dioxide capture device according to claim 1, wherein the magnet (300) includes a third magnet provided within the flow path.

9. The carbon dioxide capture device according to claim 8, wherein the third magnet is fixed to a support member (30) provided within the flow path.

10. The carbon dioxide capture device according to claim 8, wherein the third magnet is provided on a strut of a fan (15) installed within the flow path.

11. The carbon dioxide capture device according to any one of claims 1 to 10, wherein the adsorbent material (20) contains an amine.

12. The carbon dioxide capture device according to any one of claims 1 to 10, wherein the magnet (300) is a permanent magnet or an electromagnet.
